# EUROPEAN PATENT APPLICATION

(11) **EP 2 490 009 A1**
(43) Date of publication of application: **22.08.2012**
(21) Application number: 12153909.2
(22) Date of filing: 03.02.2012
(51) Int. Cl.: G01N 21/35

(54) **Terahertz wave characteristic measurement method, substance detection method, measurement instrument, terahertz wave characteristic measurement device and substance detection device**

(30) Priority: 17.02.2011 JP 2011032539; 10.01.2012 JP 2012002486
(71) Applicant: Arkray, Inc., Kyoto-shi, Kyoto 601-8045 (JP)
(72) Inventor: Kitamura, Shigeru, Kyoto-shi, Kyoto 602-0008 (JP); Uchida, Hirohisa, Kyoto-shi, Kyoto 601-8045 (JP)
(74) Representative: Piésold, Alexander James

(57) **Abstract**

A terahertz wave characteristic measurement method comprises irradiating terahertz waves at a region of a target solution in which a thickness of the solution is in the range from 10 µm to 100 µm such that a propagation direction of the terahertz waves is in a thickness direction of the solution, the solution containing at least one type of target substance to be measured, and measuring at least one of a spectral characteristic and an intensity at a particular frequency or a particular wavelength of the terahertz waves that are one of transmitted through the region and reflected from the region.

## Description

### BACKGROUND

### Technical Field

The present invention relates to a terahertz wave characteristic measurement method, a substance detection method, a measurement instrument, a terahertz wave characteristic measurement device and a substance detection device.

### Related Art

Heretofore, technologies that use electromagnetic waves in the terahertz frequency band (terahertz waves), which are highly transmissive through clothes, bags and suchlike, to detect target objects have been proposed. For example, a system has been proposed (for example, see Japanese Patent Application Laid-Open (JP-A) No. 2008-500541) that senses an item by emitting terahertz waves at the item and analyzing information on terahertz waves reflected from the item or transmitted through the item.

Further, a technique has been proposed (for example, see JP-A Nos. 2009-281864, 2009-74807 and 2010-249564) of adding one or more inorganic salts to an aqueous solution containing an organic substance, mixing, freezing and obtaining a frozen specimen of the same, and irradiating terahertz waves at the frozen specimen and measuring transmitted terahertz waves. Thus, a spectral characteristic of the organic substance in a dissolved state or a dispersed state is measured.

A liquid cell for terahertz light analysis has been proposed (for example, see JP-A Nos. 2009-288046 and 2009-288047) in which two light-transmissive substrates that transmit terahertz pulse light are superposed and adhered, and that comprises a liquid channel through which a sample solution is injected at a boundary face of the two light-transmissive substrates.

In the system of JP-A No. 2008-500541, targets to be measured are limited to solids. Further, in the technologies of JP-A Nos. 2009-281864, 2009-74807 and 2010-249564, the liquids that are the targets to be measured are measured after being momentarily frozen. This is because, if a target to be measured is a liquid specimen, water molecules in the solvent have polarity, so terahertz waves are strongly absorbed by interactions between the water molecules and it is difficult to measure a spectrum of solute molecules in the liquid.

Now, with the technology of JP-A No. 2008-500541, the targets to be measured are solid specimens. Therefore, if this technology is employed in a system for detecting target objects at, for example, an airport security checkpoint or the like, it is not possible to measure liquids, such as hydrogen peroxide, sulfuric acid and the like.

Furthermore, with the technologies of JP-A Nos. 2009-281864, 2009-74807 and 2010-249564, because the liquid specimens of targets to be measured are measured after being momentarily frozen, practical applicability to, for example, employment at an airport security checkpoint or the like is poor.

For the technology of JP-A Nos. 2009-288046 and 2009-288047, it is recited that the sample solution is not limited to being a liquid and may be, for example, an organic solvent, blood or the like. However, only ethanol and water are recited as specific examples of solvents of the sample solution, and specific details of what would be used as a solute and how the solute would behave are not recited. Moreover, although it is recited that absorption in the liquid increases and transmitted light is not obtained if the thickness of the liquid in the liquid cell for terahertz light analysis (a liquid thickness L) is large, a transmission measurement method for a sample solution containing a solvent with strong pulse light absorption such as water or the like may not be established.

### SUMMARY

The present invention has been made in order to solve the problem described above, and provides a terahertz wave characteristic measurement method capable, even if a target to be measured is a liquid, of measuring a spectral characteristic or an intensity of terahertz waves transmitted through or reflected by the target to be measured without a freezing or solidifying operation being applied, and a substance detection method, a measurement instrument, a terahertz wave characteristic measurement device and a substance detection device.

A terahertz wave characteristic detection method according to a first aspect of the present invention comprises: irradiating terahertz waves at a region in which a thickness of a solution is in the range from 10 µm to 100 µm such that a propagation direction of the terahertz waves is in a thickness direction of the solution, the solution containing at least one type of target substance to be measured; and measuring at least one of a spectral characteristic and an intensity at a particular frequency or a particular wavelength of the terahertz waves that are one of transmitted through the region and reflected from the region.

Thus, because the terahertz waves are irradiated at the region in which the thickness of the solution is in the range from 10 µm to 100 µm such that the propagation direction of the terahertz waves is the thickness direction of the solution, the effects of absorption of the terahertz waves by a solvent with polarity, such as water, may be suppressed. Therefore, even when the target to be measured is a liquid, a spectral characteristic or intensity of terahertz waves transmitted through or reflected by the target to be measured may be measured without a freezing or solidifying operation being applied.

For measuring a spectral characteristic of terahertz waves, the irradiating may comprise irradiating the terahertz waves and continuously altering a frequency or a wavelength of the terahertz waves, and the measuring may comprise measuring the spectral characteristic from the terahertz waves transmitted through the region or reflected from the region, or the irradiating may comprise irradiating the terahertz waves with continuous frequencies or wavelengths all together, and the measuring may comprise Fourier-transforming time division waveforms of the terahertz waves transmitted through the region or reflected from the region and measuring the spectral characteristic. For measuring an intensity of the terahertz waves at a particular frequency or a particular wavelength, the irradiating may comprise irradiating the terahertz waves with at least one particular frequency or particular wavelength, and the measuring may comprise measuring the intensity of the terahertz waves transmitted through the region or reflected from the region.

The spectral characteristic or the intensity of the terahertz waves may be expressed as a ratio of one of transmittance and reflectivity of the terahertz waves transmitted through the region or reflected from the region relative to a transmittance or a reflectivity of terahertz waves transmitted through or reflected from a pre-specified thickness of solvent not containing the target substance to be measured. Thus, target substances may be clearly distinguished by reference from the solvent not containing a target substance to be measured.

The solvent of the solution and the solvent not containing the target substance to be measured may comprise at least one type of polar molecules.

The terahertz waves that have passed through one or more objects may be irradiated at the region with the thickness in the range from 10 µm to 100 µm. Thus, spectral characteristics or intensities of terahertz waves may be obtained with the assumption that detections are carried out through objects such as, for example, clothing, bags and the like.

A substance detection method according to a second aspect of the present invention comprises: measuring, by the terahertz wave characteristic measurement method according to the first aspect, at least one of a spectral characteristic and an intensity of terahertz waves from a solution containing an unknown substance; and comparing the measured spectral characteristic or intensity with a spectral characteristic or intensity of terahertz waves from a solution containing a known substance that has been measured by the terahertz wave characteristic measurement method according to the first aspect and identifying the unknown substance.

A measurement instrument according to a third aspect of the present invention is a measurement instrument to be used for measuring at least one of a spectral characteristic and an intensity at a particular frequency or a particular wavelength of terahertz waves that are one of transmitted through a solution containing at least one type of target substance to be measured and reflected from the solution, wherein the measurement instrument comprises a gap portion to be charged with the solution such that a region in which a thickness of the solution is in the range from 10 µm to 100 µm is formed.

A terahertz wave characteristic measurement device according to a fourth aspect of the present invention comprises: a terahertz wave generation unit comprising a light generation unit and a non-linear optical crystal; the measurement instrument according to the third aspect that is disposed such that a propagation direction of the terahertz waves generated by the terahertz wave generation unit is in the thickness direction of the solution; and a measurement unit that measures at least one of a spectral characteristic and an intensity at a particular frequency or a particular wavelength of terahertz waves that are one of transmitted through the region and reflected from the region.

According to the terahertz wave characteristic measurement device of the fourth aspect of the invention, the measurement instrument, which comprises the gap portion that is filled with a solution such that a region is formed in which the thickness of the solution is in the range from 10 µm to 100 µm, is disposed such that the propagation direction of the terahertz waves generated by the terahertz wave generation unit is the thickness direction of the solution. The terahertz waves are irradiated by the terahertz wave generation unit at the solution charged into the gap portion. The measurement unit measures a spectral characteristic of terahertz waves transmitted through that region or reflected from that region, or an intensity of the transmitted or reflected terahertz waves at a particular frequency or a particular wavelength.

Thus, when the measurement instrument with the gap portion to be charged with the solution such that the region in which the thickness of the solution is in the range from 10 µm to 100 µm is formed is used, with the gap portion being filled with a target measurement solution and the terahertz waves being irradiated at the region such that the propagation direction of the terahertz waves is in the thickness direction of the solution, the effect of absorption of the terahertz waves by a solvent with polarity such as water may be suppressed. Therefore, even when the target to be measured is a liquid, a spectral characteristic or intensity of terahertz waves transmitted through or reflected by the target to be measured may be measured without a freezing or solidifying operation being applied.

The light generation unit may generate light with two different wavelengths as excitation light, and the light generation unit may generate femtosecond or nanosecond pulsed light as excitation light.

Further, the terahertz wave generation unit may generate terahertz waves with continuous frequencies or wavelengths all together.

A substance detection device according to a fifth aspect of the present invention comprises: the terahertz wave characteristic measurement device according to the fourth aspect; and an identification device that compares a spectral characteristic or intensity of terahertz waves from a solution containing an unknown substance that has been measured by the terahertz wave characteristic measurement device with a spectral characteristic or intensity of terahertz waves from a solution containing a known substance, and identifies the unknown substance.

### BRIEF DESCRIPTION OF THE DRAWINGS

Exemplary embodiments of the present invention will be described in detail based on the following figures, wherein:
Fig. 1 is a structural diagram illustrating a general structure of a substance detection device of a present exemplary embodiment;
Fig. 2A is an exploded perspective diagram of a spectral characteristic measurement instrument;
Fig. 2B is a sectional diagram of the spectral characteristic measurement instrument;
Fig. 3 is a graph illustrating a spectral characteristic of hydrogen peroxide;
Fig. 4 is a graph illustrating spectral characteristics of strongly acidic aqueous solutions;
Fig. 5 is a graph illustrating spectral characteristics of water-soluble salts; and
Fig. 6 is a flowchart illustrating a substance detection processing routine that is executed at the substance detection device of the present exemplary embodiment.

### DETAILED DESCRIPTION

Herebelow, an exemplary embodiment of the terahertz wave characteristic measurement method, substance detection method, measurement instrument, terahertz wave characteristic measurement device and substance detection device of the present invention is described in detail with reference to the attached drawings. For the present exemplary embodiment, a situation is described in which a solution, in which a target substance to be measured is contained in a solvent with polarity such as water, is measured to detect the substance in the solution. Other examples of solvents with polarity comprise alcohols and the like. Of alcohols, for example, methanol and ethanol can be mentioned. To be an object of the present invention, it is sufficient for a solvent to be a solvent with polarity, and the solvent is not limited to the solvents mentioned here.

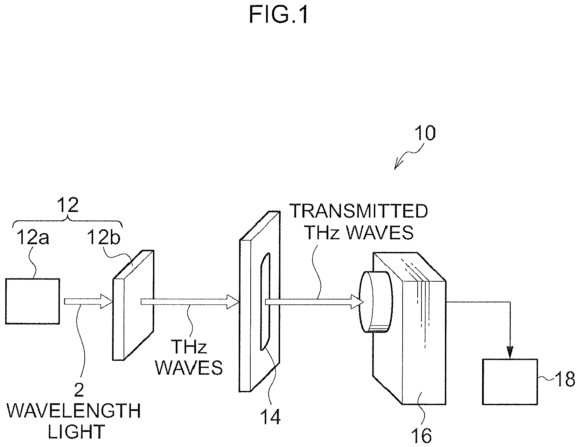

As illustrated in Fig. 1, a substance detection device 10 of the present exemplary embodiment comprises a terahertz wave generation unit 12 that generates terahertz waves, a spectral characteristic measurement instrument 14, a measurement unit 16 that measures terahertz waves transmitted through a target to be measured, and a processing section 18 that executes processing to identify the target substance to be measured on the basis of the measured terahertz wave spectral characteristic.

The terahertz wave generation unit 12 comprises a two-wavelength light generation unit 12a that generates excitation light with two different wavelengths and a non-linear optical crystal 12b that generates terahertz waves corresponding to a difference frequency component between the two different wavelengths by differential frequency generation (DFG) from the light with two different wavelengths that is incident thereon. A KTP (potassium titanyl phosphate) parametric resonator, a two-wavelength light-generating laser unit or the like may be used as the two-wavelength light generation unit 12a. The frequency of the terahertz waves generated by the non-linear optical crystal 12b may be altered by control of the wavelengths of the excitation light generated by the two-wavelength light generation unit 12a.

An organic optical crystal may be used as the non-linear optical crystal 12b, such as a DAST (4-dimethylamino-N-methyl-4-stilbazolium tosylate) crystal 10a, a DASC (4-dimethylamino-N-methyl-4-stilbazolium-p-chlorobenzene sulfonate) crystal, an OH1 (2-(3-(4-hydroxystyryl)-5,5-dimethyl cyclohex-2-enylidene)malononitrile) crystal or the like. Further, an inorganic optical crystal may be used, such as gallium phosphate (GaPO₄), gallium arsenide (GaAs), lithium niobate (LiNbO₃) or the like.

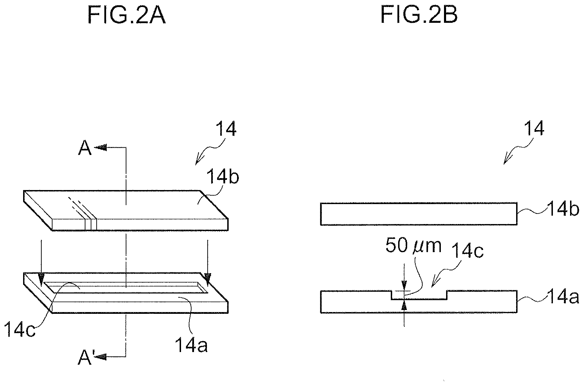

Fig. 2A is an exploded perspective diagram of the spectral characteristic measurement instrument 14 and Fig. 2B is a sectional diagram taken along line A-A' of Fig. 2A. As illustrated in Fig. 2A and Fig. 2B, the spectral characteristic measurement instrument 14 is constituted by joining together two thin plates 14a and 14b. As a substance of the thin plates 14a and 14b, an olefin-based substance with high transmittance of terahertz waves, for example, an ultra-high molecular weight polyethylene (UHMW-PE), high-resistance silicon wafers or the like may be used.

A channel 50 µm deep is formed in the thin plate 14a. In the state in which the thin plate 14a and the thin plate 14b are joined together, this channel forms a microduct 14c (gap portion) into which a solution that is a target to be measured will be charged. The spectral characteristic measurement instrument 14 is disposed between the terahertz wave generation unit 12 and the measurement unit 16 such that a direction of propagation of the terahertz waves generated by the terahertz wave generation unit 12 is in the depth direction of the microduct 14c.

While the depth of the microduct 14c is set to 50 µm in this case, it is sufficient that the depth of the microduct 14c is in a range from 10 µm to 100 µm. If the depth of the microduct 14c is less than 10 µm, the terahertz waves are excessively transmitted and a distinctive spectral characteristic may not be obtained. In addition, charging the target solution to be measured into the microduct 14c becomes a difficult operation. On the other hand, if the depth of the microduct 14c is greater than 100 µm, the effect of absorption of the terahertz waves by water molecules in the solvent is strong and a spectral characteristic of a substance in the solution may not be measurable. Therefore, it is excellent if the depth of the microduct 14c is in the range from 10 µm to 100 µm.

The measurement unit 16 measures intensities of terahertz waves that have passed through the spectral characteristic measurement instrument 14 into which the microduct 14c the target solution to be measured has been charged. More specifically, while the frequency of the terahertz waves generated by the terahertz wave generation unit 12 is continuously altered, the measurement unit 16 measures a spectral characteristic of the terahertz waves transmitted through the solution.

The spectral characteristic measurement instrument 14 described above is an example of the measurement instrument of the present invention, and the structure described above that is formed by the terahertz wave generation unit 12, the spectral characteristic measurement instrument 14 and the measurement unit 16 is an example of the terahertz wave characteristic measurement device of the present invention. A method implemented by this structure is an example of the terahertz wave characteristic measurement method of the present invention.

The processing section 18 is constituted by a microcomputer comprising a CPU, a ROM, a RAM and the like. The processing section 18 acquires a terahertz wave spectral characteristic measured by the measurement unit 16 and converts the spectral characteristic to a spectral characteristic expressed as ratios relative to a reference which is transmittances of water. The processing section 18 compares the converted spectral characteristic with spectral characteristics of previously known substances expressed as ratios relative to water, which are memorized in advance, and identifies the target substance to be measured. Each spectral characteristic of a previously known substance that is expressed as ratios relative to water will have been obtained in advance by the aforementioned spectral characteristic measurement method. Specifically, the previously known substance is charged into the microduct 14c of the spectral characteristic measurement instrument 14, terahertz waves are irradiated thereat by the terahertz wave generation unit 12, and a spectral characteristic of terahertz waves transmitted through this solution is measured by the measurement unit 16. Thus, using a similarly measured spectral characteristic of water, a spectral characteristic of the previously known substance expressed as ratios of transmittances to transmittances of water at the same frequencies is obtained.

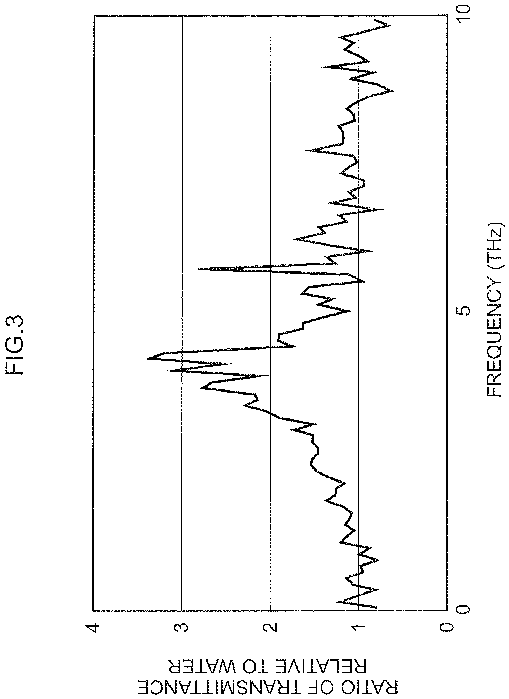

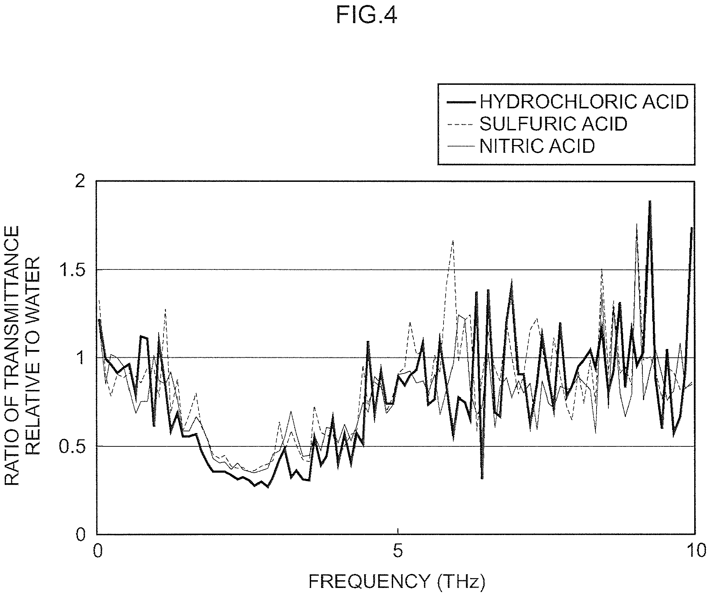

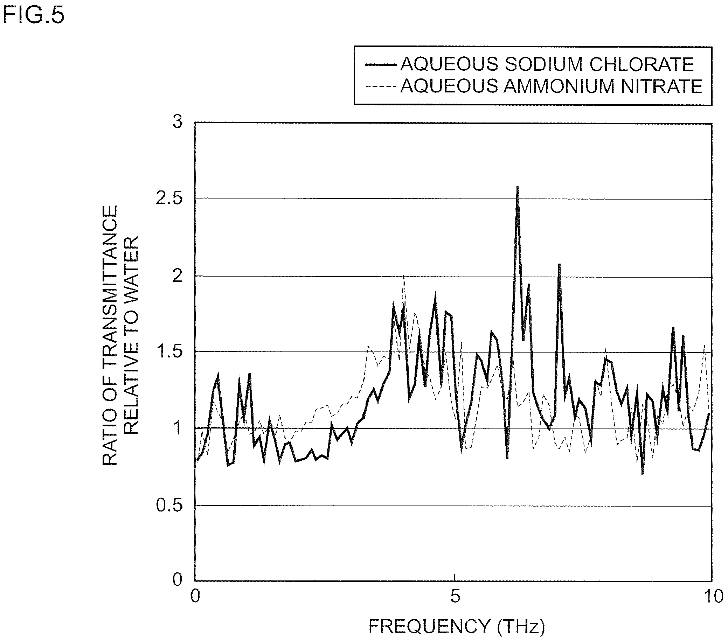

For example, a spectral characteristic expressed as ratios of transmittances of hydrogen peroxide relative to transmittances of water (hereinafter referred to as "a hydrogen peroxide spectral characteristic") is illustrated in Fig. 3 as an example of a spectral characteristic of a previously known substance. The hydrogen peroxide spectral characteristic may be distinguished from water by the peak that appears in the vicinity of 4 THz. Respective spectral characteristics expressed as ratios of transmittances of, respectively, hydrochloric acid, sulfuric acid and nitric acid to transmittances of water are illustrated in Fig. 4 (hereinafter, these are collectively referred to as "strongly acidic solution spectral characteristics"). The strongly acidic solution spectral characteristics may be distinguished from water by the absorption peaks that appear in the vicinity of 2.5 THz. Further, respective spectral characteristics expressed as ratios of transmittances of, respectively, aqueous sodium chlorate and aqueous ammonium nitrate to transmittances of water are illustrated in Fig. 5 (hereinafter, these are collectively referred to as "water-soluble salt spectral characteristics"). Similarly to hydrogen peroxide, the water-soluble salt spectral characteristics may be distinguished from water by the peaks appearing in the vicinity of 4 THz. The terahertz wave spectral characteristics of these previously known substances and information obtained from these spectral characteristics are memorized in advance as reference information for when identifying unknown substances.

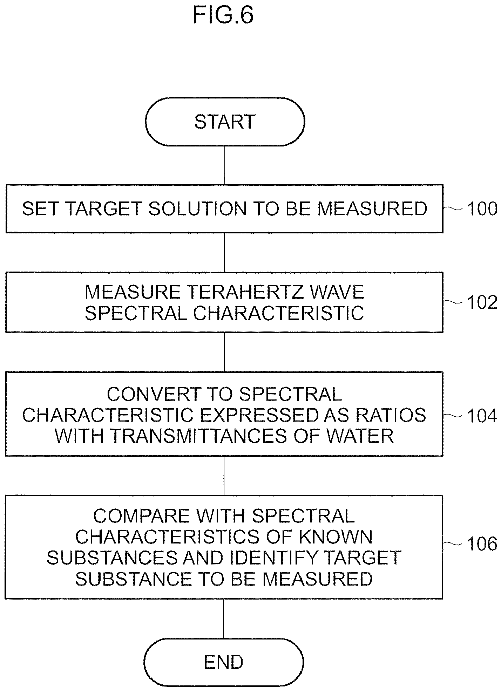

Next, a substance detection processing routine that is executed at the substance detection device 10 of the present exemplary embodiment is described with reference to Fig. 6.

In step 100, a target solution to be measured is charged into the microduct 14c of the spectral characteristic measurement instrument 14, and the spectral characteristic measurement instrument 14 is disposed between the terahertz wave generation unit 12 and the measurement unit 16 such that the propagation direction of the terahertz waves generated by the terahertz wave generation unit 12 is in the depth direction of the microduct 14c.

Then, in step 102, while the frequency of the terahertz waves generated by the terahertz wave generation unit 12 is being continuously altered, transmission intensities of terahertz waves passing through the solution are detected by the measurement unit 16. Thus, a spectral characteristic is measured. Data of the measured spectral characteristic is then outputted to the processing section 18.

In step 104, the spectral characteristic measured in step 102 is converted to a spectral characteristic expressed as ratios of transmittances of the measured substance to water transmittances at the same frequencies, using a similarly measured spectral characteristic of water.

In step 106, the terahertz wave spectral characteristics of previously known substances, which have been pre-memorized in a predetermined memory region, are read out and compared with the spectral characteristic converted in step 106. Thus, a substance contained in the target solution to be measured is identified. The results are outputted and the processing ends.

As described above, according to the substance detection device of the present exemplary embodiment, the effects of absorption of terahertz waves by a solvent with polarity such as water may be suppressed by using the spectral characteristic measurement instrument that comprises the microduct with a depth in the range from 10 µm to 100 µm (50 µm in this embodiment), charging a target solution to be measured into the microduct, and illuminating terahertz waves at the solution such that the propagation direction of the terahertz waves is the depth direction of the microduct. Therefore, even when the target to be measured is a liquid, a spectral characteristic may be measured using terahertz waves without a freezing or solidifying operation being applied. Moreover, because spectral characteristics that are expressed as transmittance ratios relative to water are used, a substance that should be detected may be clearly distinguished from water.

In the above exemplary embodiment, a constitution is described in which the spectral characteristic measurement instrument is constituted by joining together two thin plates in one of which a channel is formed, but this constitution is not limiting. It is sufficient that the depth of a gap portion for charging a target solution to be measured into is between 10 µm and 100 µm.

In the above exemplary embodiment, a constitution in which the depth of the gap portion (microduct) in the spectral characteristic measurement instrument is in the range from 10 µm to 100 µm and the solution is charged into this gap portion is described. However, provided a thickness of the solution in a region at which the terahertz waves are irradiated is in the range from 10 µm to 100 µm, the actual depth of the gap portion is not necessarily required to be in the range from 10 µm to 100 µm. Furthermore, the gap portion does not have to be completely filled with the solution; it is sufficient that a region is formed in which the thickness of the solution is between 10 µm and 100 µm.

In the above exemplary embodiment, a case is described in which 50 µm is selected in the range from 10 µm to 100 µm to be the depth of the gap portion. However, as is also recited in JP-A Nos. 2009-288046 and 209-288047 and the like, absorbed light intensities with other thicknesses in the range from 10 µm to 100 µm may be analyzed by applying the Lambert-Beer law. More specifically, based on the recitation in JP-A Nos. 2009-288046 and 209-288047 that, according to the Lambert-Beer law, a difference between incident light intensity and transmitted light intensity disappears as the thickness of a liquid, which is to say the depth of the gap portion, becomes smaller, selecting a value other than 50 µm in the range from 10 µm to 100 µm for the depth of the gap portion and applying the selection to the present invention may be practised with ease by the ordinary practitioner.

When the depth of the gap portion is in the range from 10 µm to 100 µm as in the present invention, a peak in transmittance of the solution may be observed regardless of whether the difference between incident light intensity and transmitted light intensity of the solvent is eliminated or not.

In the above exemplary embodiment, a constitution in which terahertz waves transmitted through the solution are measured is described. However, terahertz waves reflected from the solution may be measured. In such a constitution, a substance with high reflectivity of terahertz waves may be used as one face of the spectral characteristic measurement instrument.

With a view to employment in, for example, the field of airport security checkpoints and the like, when the spectral characteristics of previously known substances are being measured, an object such as a cloth or the like may be disposed between the terahertz wave generation unit and the spectral characteristic measurement instrument, and terahertz waves may be irradiated at the solution through this object. Hence, spectral characteristics may be obtained with the assumption that a target substance to be detected will be inside clothing or a bag or the like.

In the above exemplary embodiment, a constitution that uses spectroscopy in which a spectral characteristic is measured using a variable-wavelength terahertz wave generation unit is described. However, a spectral characteristic may be measured by time domain spectroscopy (TDS), in which a spectral characteristic is measured by terahertz waves with continuous frequencies or wavelengths being transmitted through or reflected by a solution all together and the results being Fourier-transformed. In such a constitution, the terahertz wave generation unit 12 uses a pulsed light generation unit from which excitation light is generated in femtosecond or nanosecond pulses as an excitation light source instead of the two-wavelength light generation unit 12a, and terahertz waves are generated by irradiating this excitation light at the non-linear optical crystal 12b. Frequencies of the terahertz waves generated thus are ordinarily from 0.1 to 10.0 THz. Hence, these terahertz waves (femtosecond or nanosecond pulsed light) are irradiated at a solution containing a target substance to be measured, waveforms of the transmitted or reflected terahertz waves are measured in time divisions, and the amplitudes and phases at respective frequencies are obtained by Fourier-transforming the time division waveforms.

Furthermore, the intensities of terahertz waves transmitted through or reflected by a solution may be measured using one or more particular frequencies or particular wavelengths. When detecting for a particular substance such as, for example, hydrogen peroxide, hydrochloric acid or the like, if the peak frequencies or wavelengths are known in advance, it is sufficient to irradiate terahertz waves with the particular frequency/frequencies or particular wavelength/wavelengths rather than continuously altering the frequency or wavelength (as in DFG) or irradiating terahertz waves with continuous frequencies or wavelengths all together (as in TDS).

In the above exemplary embodiment, a constitution is described in which a spectral characteristic expressed as ratios relative to the spectral characteristic of water is used as the spectral characteristic, but this is not limiting. The spectral characteristics of substances may be used as is, and information representing features obtained from spectral characteristics may be used.

## Claims

1. A terahertz wave characteristic measurement method comprising:
irradiating terahertz waves at a region in which a thickness of a solution is in the range from 10 µm to 100 µm such that a propagation direction of the terahertz waves is in a thickness direction of the solution, the solution containing at least one type of target substance to be measured; and
measuring at least one of
a spectral characteristic and
an intensity at a particular frequency or a particular wavelength of the terahertz waves that are one of transmitted through the region and reflected from the region.

2. The terahertz wave characteristic measurement method according to claim 1, wherein, for measuring a spectral characteristic of the terahertz waves, the irradiating comprises irradiating the terahertz waves and continuously altering a frequency or a wavelength of the terahertz waves, and the measuring comprises measuring the spectral characteristic from the terahertz waves transmitted through the region or reflected from the region.

3. The terahertz wave characteristic measurement method according to claim 1, wherein, for measuring a spectral characteristic of the terahertz waves, the irradiating comprises irradiating the terahertz waves with continuous frequencies or wavelengths all together, and the measuring comprises Fourier-transforming time division waveforms of the terahertz waves transmitted through the region or reflected from the region and measuring the spectral characteristic.

4. The terahertz wave characteristic measurement method according to claim 1, wherein, for measuring an intensity of the terahertz waves at a particular frequency or a particular wavelength, the irradiating comprises irradiating the terahertz waves with at least one particular frequency or particular wavelength, and the measuring comprises measuring the intensity of the terahertz waves transmitted through the region or reflected from the region.

5. The terahertz wave characteristic measurement method according to any preceding claim, wherein the spectral characteristic or the intensity of the terahertz waves is expressed as a ratio of one of transmittance and reflectivity of the terahertz waves transmitted through the region or reflected from the region relative to a transmittance or a reflectivity of terahertz waves transmitted through or reflected from a pre-specified thickness of a solvent not containing the target substance to be measured.

6. The terahertz wave characteristic measurement method according to any preceding claim, wherein a solvent of the solution and the solvent not containing the target substance to be measured comprises at least one type of polar molecules.

7. The terahertz wave characteristic measurement method according to any preceding claim, wherein the irradiating comprises irradiating the terahertz waves through at least one object at the region.

8. The terahertz wave characteristic measurement method according to any preceding claim, wherein
the solution is charged into a measurement instrument comprising a gap portion, and
the irradiating comprises irradiating the terahertz waves such that the propagation direction is in the thickness direction at a region in which the thickness of the solution in the gap portion is in the range from 10 µm to 100 µm.

9. A substance detection method comprising:
measuring, by the terahertz wave characteristic measurement method according to any preceding claim, at least one of a spectral characteristic and an intensity of terahertz waves from a solution containing an unknown substance; and
comparing the measured spectral characteristic or intensity with a spectral characteristic or intensity of terahertz waves from a solution containing a known substance that has been measured by the terahertz wave characteristic measurement method according to claim 1, and identifying the unknown substance.

10. A measurement instrument to be used for measuring at least one of
a spectral characteristic and
an intensity at a particular frequency or a particular wavelength of terahertz waves that are one of transmitted through a solution containing at least one type of target substance to be measured and reflected from the solution,
the measurement instrument comprising a gap portion to be charged with the solution such that a region in which a thickness of the solution is in the range from 10 µm to 100 µm is formed.

11. A terahertz wave characteristic measurement device comprising:
a terahertz wave generation unit comprising a light generation unit and a non-linear optical crystal;
the measurement instrument according to claim 10 that is disposed such that a propagation direction of the terahertz waves generated by the terahertz wave generation unit is in the thickness direction of the solution; and
a measurement unit that measures at least one of
a spectral characteristic and
an intensity at a particular frequency or a particular wavelength of terahertz waves that are one of transmitted through the region and reflected from the region.

12. The terahertz wave characteristic measurement device according to claim 11, wherein the light generation unit generates light with two different wavelengths as excitation light.

13. The terahertz wave characteristic measurement device according to claim 11, wherein the light generation unit generates femtosecond or nanosecond pulsed light as excitation light.

14. The terahertz wave characteristic measurement device according to claim 11 or 13, wherein the terahertz wave generation unit generates terahertz waves with continuous frequencies or wavelengths all together.

15. A substance measurement device comprising:
the terahertz wave characteristic measurement device according to claim 11, 12, 13 or 14; and
an identification device that compares a spectral characteristic or intensity of terahertz waves from a solution containing an unknown substance that has been measured by the terahertz wave characteristic measurement device with a spectral characteristic or intensity of terahertz waves from a solution containing a known substance, and identifies the unknown substance.
